# EUROPÄISCHE PATENTSCHRIFT

(11) **EP 1 104 723 B1**
(45) Veröffentlichungstag und Bekanntmachung des Hinweises auf die Patenterteilung: **29.09.2004**
(21) Anmeldenummer: 00124302.1
(22) Anmeldetag: 15.11.2000
(51) Int. Cl.: B60R 21/16

(54) **Seitengassack**
Side airbag
Coussin gonflable latéral

(30) Priorität: 02.12.1999 DE 19958099
(43) Veröffentlichungstag der Anmeldung: 06.06.2001
(73) Patentinhaber: TRW Automotive GmbH, 73553 Alfdorf (DE)
(72) Erfinder: Bürkle, Kai, 71394 Kernen (DE); Gunst, Jochen, 73116 Wäschenbeuren (DE)
(74) Vertreter: Sties, Jochen, Dipl.-Ing.

(56) Entgegenhaltungen:
- DE-A- 19 742 151
- US-A- 5 667 243

## Beschreibung

Die Erfindung betrifft eine Baugruppe nach dem Oberbegriff des Anspruchs 1. Die Erfindung betrifft ferner einen Gassack für eine derartige Baugruppe sowie ein Verfahren zur Faltung eines Gassackes für eine Gassack-Seilenaufprall-Schutzeinrichtung einer solchen Baugruppe.

In der DE 19742151A1 ist ein solche Gassak beschrieben, bei dem eine oberhalb der Einblasöffnung gelegene Kammer nach Innen gestülpt ist.

Beim Aufblasen des Gassackes besteht für den Fahrzeuginsassen eine Verletzungsgefahr, insbesondere wenn sich dieser nicht in einer ordnungsgemäßen Sitzposition befindet, also beispielsweise wenn er den Kopf zur Fahrzeugaußenseite wendet. Dabei kann der sich explosionsartig entfaltende obere Teil des Gassackes den Fahrzeuginsassen mit einer hohen Wucht unter dem Kinn treffen, so daß der Fahrzeuginsasse hohen Belastungswerten ausgesetzt ist. Vor allem Kleinkinder sind von diesem Problem betroffen, da sich zum einen ihr Kopf näher am Gassack befindet und zum anderen solch hohe Belastungswerte eine extreme Gefahr darstellen.

Der Erfindung liegt die Aufgabe zugrunde, eine Baugruppe der eingangs genannten Art dahingehend weiterzuentwickeln, daß die genannte Gefährdung weitestgehend vermieden wird.

Dies ist gemäß der Erfindung bei einer Baugruppe mit den Merkmalen des Anspruchs 1 eweiert. Ein derartig gefalteter Gassack entfaltet sich beim Aufblasen zunächst in Richtung der Fahrzeugaußenseite und dann erst nach oben. Daher wird der Kopf des Fahrzeuginsassen nicht von unten getroffen und nach oben gedrückt, sondern mit der gesamten Fläche erfaßt und zur Fahrzeuginnenseite bewegt.

Die Erfindung schafft weiterhin einen Gassack für eine Gassack-Seitenaufprall-Schutzeinrichtung einer erfindungsgemäße Baugruppe. Gegenstand der Erfindung ist außerdem ein Verfahren zur Faltung eines Gassackes für eine Gassack-Seitenaufprall-Schutzeinrichtung einer erfindungsgemäße Baugruppe

Gemäß einer bevorzugten Ausführungsform der Erfindung ist der oberhalb der Einblasöffnung gelegene Abschnitt des Gassackes zick-zackförmig gefaltet. Aufgrund dieser Faltung wird erreicht, daß sich der Gassack treppenartig auffaltet und an der Fahrzeugaußenseite nach oben schiebt.

Weitere vorteilhafte Ausgestaltungen der Erfindung und deren Vorteile ergeben sich aus der nachfolgenden Beschreibung, die sich auf die beigefügten Zeichnungen bezieht, in welchen zeigen:
- Figuren 1a-f eine erfindungsgemäße Baugruppe in aufeinanderfolgenden Entfaltungsstadien des Gassackes;
- Fig. 2 in Draufsicht einen Gassackes nach dem ersten Schritt des erfindungsgemäßen Faltungsverfahrens;
- die Figuren 3a und 3b eine Draufsicht und einen Querschnitt durch den Gassack aus Fig. 2 nach einem zweiten Schritt des Verfahrens;
- die Figuren 4a und 4b eine Draufsicht und einen Querschnitt durch den Gassack aus Fig. 2 nach einem dritten Schritt des Verfahrens;
- die Figuren 5a und 5b eine Draufsicht und einen Querschnitt durch den Gassack aus Fig. 2 nach einem vierten Schritt des Verfahrens;
- die Figuren 6a und 6b eine Draufsicht und einen Querschnitt durch den Gassack aus Fig. 2 nach einem fünften Schritt des Verfahrens; und
- Fig. 7 einen Querschnitt durch den Gassack aus Fig. 2 nach einem sechsten Schritt des Verfahrens.

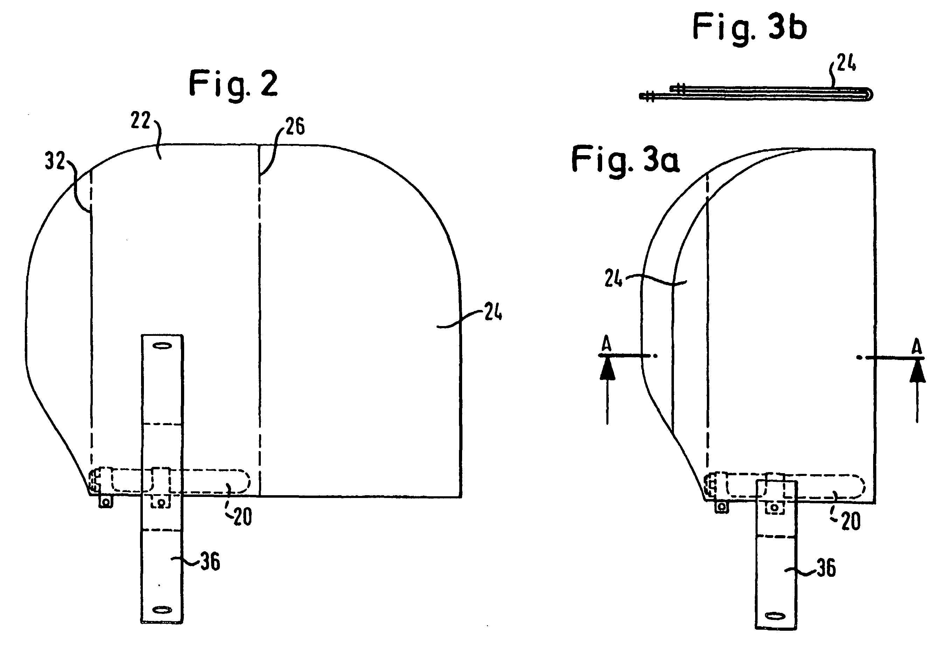

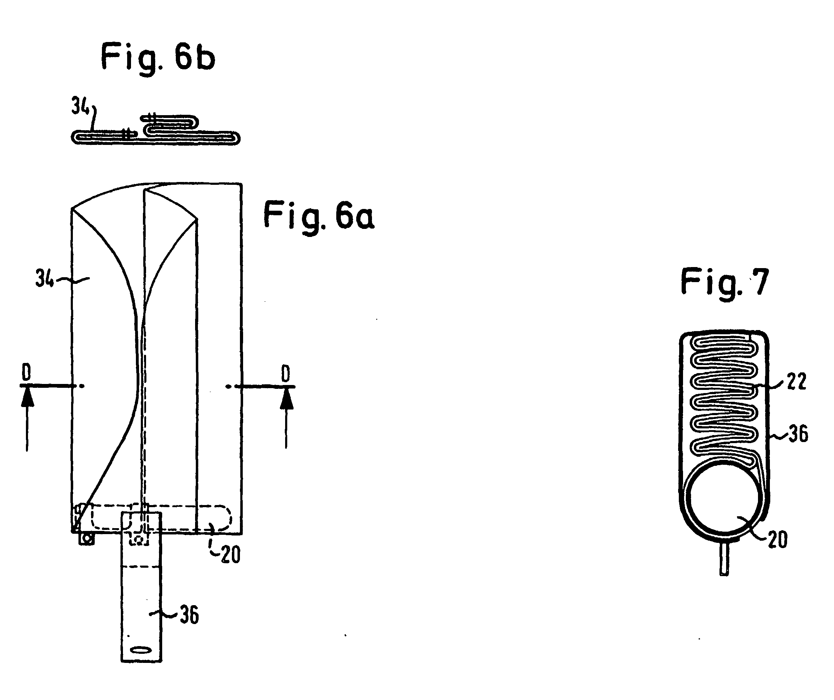

Zum besseren Verständnis sei zuerst das erfindungsgemäße Verfahren zur Faltung eines Gassackes erläutert. In den Fig. 2 bis 7 ist ein Gassack für eine Seitenaufprall-Schutzeinrichtung nach den einzelnen Schritten des erfindungsgemäßen Faltungsverfahrens dargestellt. Im oberen Teil der Fig. 3 bis 6 und in Fig. 7 ist jeweils ein Schnitt durch den Gassack nach dem entsprechenden Verfahrensschritt zu sehen.

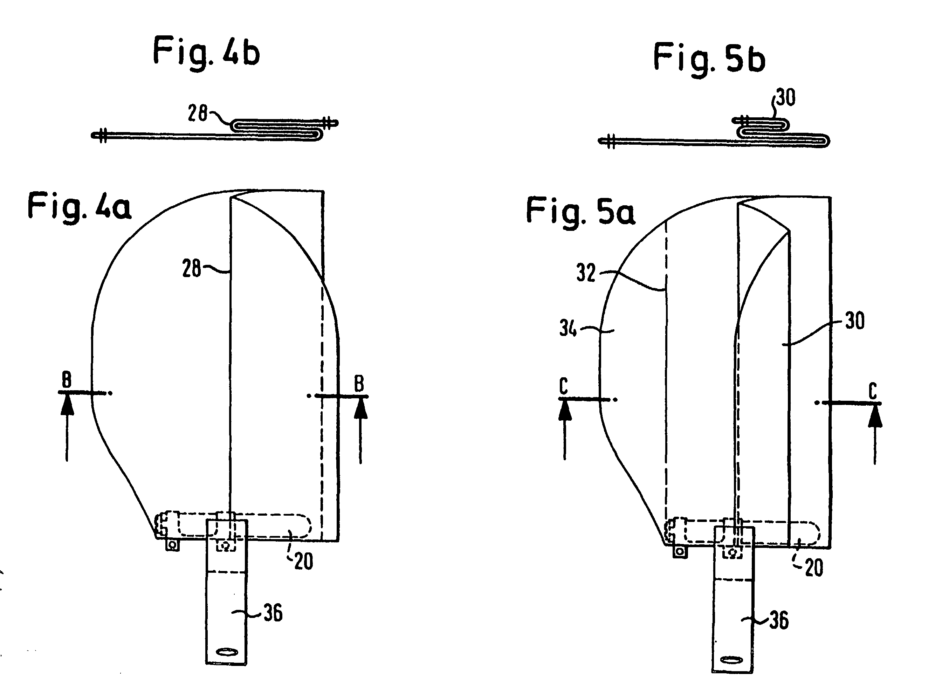

Der Gassack wird zunächst mit der später im eingebauten Zustand zur Fahrzeugseitenwand weisenden Außenseite nach oben ausgebreitet, so daß die Einblasöffnung bzw. der daran montierte Gasgenerator 20 nach vorne (in der Zeichnung unten) und der im aufgeblasenen Zustand oberhalb der Einblasöffnung gelegene Abschnitt 24 nach rechts zeigt (Fig. 2). Der Abschnitt 24 wird entlang einer vom rechten Rand des Gasgenerators nach hinten verlaufenden Linie 26 nach links gefaltet (Fig. 3). Die Hälfte des nach links gefalteten oberen Abschnitts 24 wird entlang einer parallel zur ersten Faltungslinie 26 verlaufenden zweiten Faltungslinie 28 nach rechts gefaltet (Fig. 4). Die nach rechts gefaltete Hälfte wird nochmals geteilt und der außenliegende Abschnitt 30 nach links gefaltet, so daß nunmehr die durch das dreimalige Falten entstandenen Teile des oberen Abschnittes 24 in einem Stapel übereinander liegen (Fig. 5). Nun wird entlang einer Linie 32, ausgehend vom linken Rand des Gasgenerators 20 parallel zu den anderen Faltlinien 26, 28 der linke Abschnitt 34 nach rechts eingefaltet (Fig. 6). Der Gassack 22 kann nunmehr in herkömmlicher Weise z.B. zick-zackförmig (Fig. 7) gefaltet und mit dem Halteband 36 zusammengehalten werden.

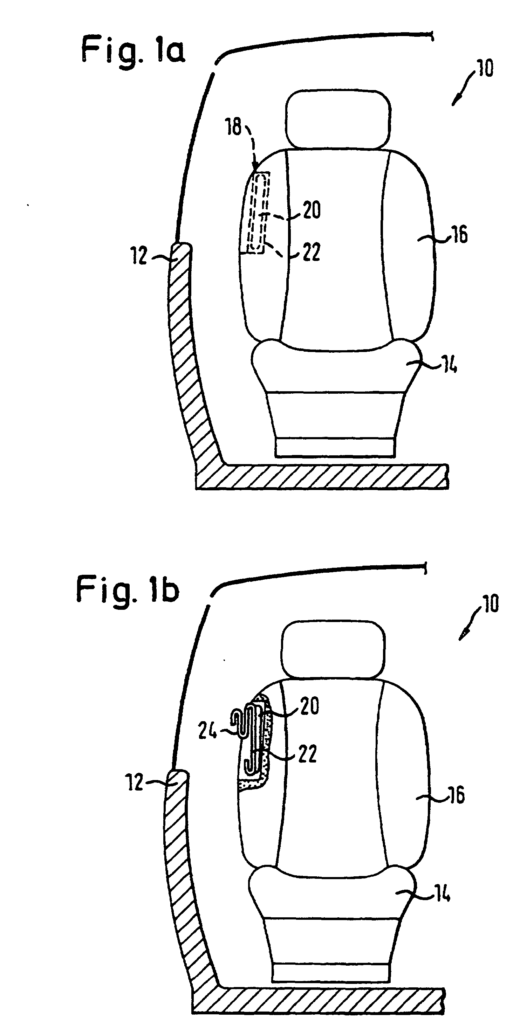

In den Fig. 1a-1f ist eine erfindungsgemäße Baugruppe dargestellt, die aus einer Fahrzeugstruktur 10 mit einer Fahrzeugseitenwand 12 und einem Sitz 14 besteht. Der Sitz 14 besitzt eine Rückenlehne 16. In der Rückenlehne 16 ist auf der zur Fahrzeugaußenseite weisenden Seite eine Gassack-Seitenaufprall-Schutzeinrichtung 18 mit einem Gasgenerator 20 und einem Gassack 22 eingebaut. Der Gassack 22 ist nach dem vorher beschriebenen erfindungsgemäßen Verfahren gefaltet.

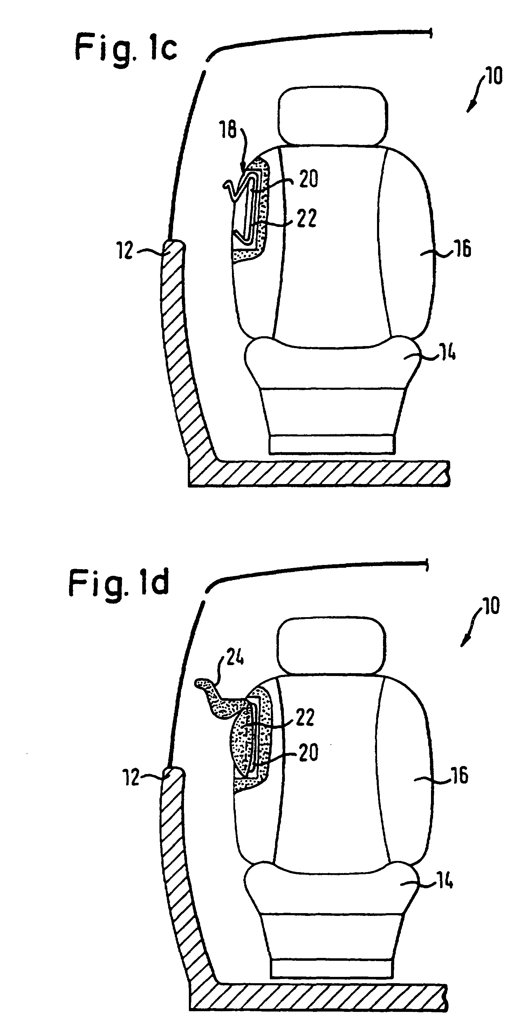

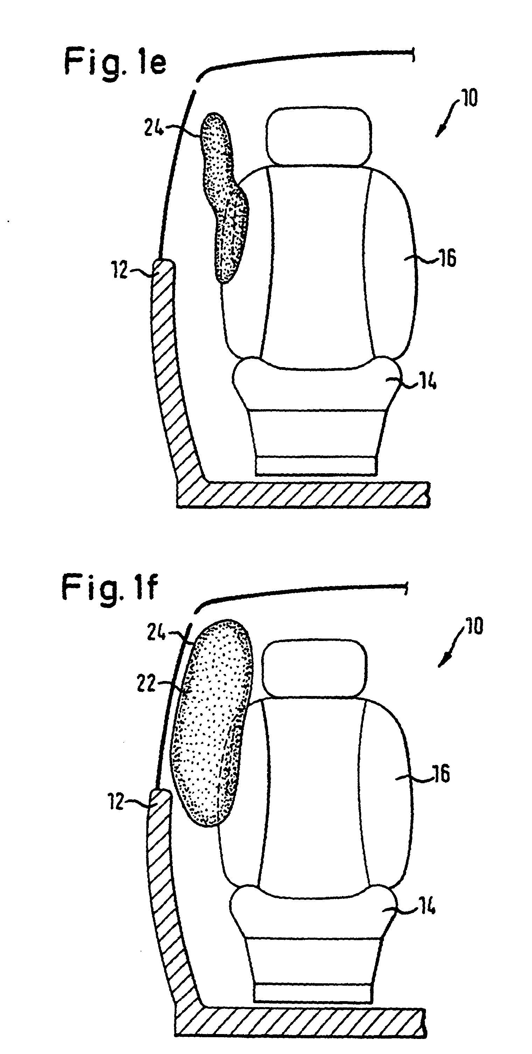

Bei Auslösung der Schutzeinrichtung 18 wird der Gasgenerator 20 gezündet und liefert Druckgas, welches in den Gassack 22 strömt. Durch das einströmende Druckgas beginnt der Gassack 22, sich zu entfalten. Der Gassack 22 entfaltet sich zunächst im wesentlichen entlang der Fahrzeugseitenwand 12 in Fahrtrichtung des Fahrzeugs - in den Zeichnungen senkrecht zur Bildebene. Dabei bildet der obere Abschnitt 24 einen Stapel auf der zur Fahrzeugseitenwand weisenden Außenseite des Gassackes 22. Durch das Einströmen des Druckgases entfaltet sich der Gassack 22 weiter, wobei sich der zick-zackförmig gefaltete obere Abschnitt 24 zunächst im wesentlichen in Richtung der Fahrzeugseitenwand 12 bewegt (Fig. 1b und 1c). Mit weiterem Einströmen von Druckgas entfaltet sich der obere Abschnitt 24 an der Fahrzeugseitenwand 12 entlang nach oben (Fig. 1d und 1e), bis der Gassack 22 vollständig entfaltet ist (Fig. 1f).

Wie zu sehen ist, kann der auf diese Weise gefaltete Gassack beim Entfalten einem Fahrzeuginsassen keinen Schlag von unten auf den Kopf (Kinnhaken) ausüben, selbst wenn sich dieser in einer nicht optimalen Sitzposition befindet oder wenn es sich etwa um ein Kleinkind handelt, das auf dem Sitz kniet und den Kopf nach hinten oder zur Seite wendet.

Selbstverständlich ist die Erfindung nicht auf die gezeigte Ausführungsform beschränkt. Vielmehr kann die Gassack-Seitenaufprall-Schutzeinrichtung mit dem Gassack genauso gut in die Rückenlehne einer Rücksitzbank oder in die Armaturentafel beispielsweise in der Nähe der A-Säule eingebaut sein.

Anstelle der Zick-Zack-Faltung des oberen Abschnittes 24 ist auch eine andere, beispielsweise eine spiralartige, oder sonstige Faltung denkbar, wenn sie einen Stapel auf der Außenseite des Gassackes 22 ergibt, so daß sich der obere Abschnitt beim Entfalten zuerst in Richtung der Fahrzeugseitenwand bewegt.

## Patentansprüche

1. Baugruppe bestehend aus einer Fahrzeugstruktur (10) mit einer Fahrzeugseitenwand (12) und aus einer Gassack-Seitenaufprall-Schutzeinrichtung (18) mit einem Gassack (22), der mittels Druckgas, das von einer Druckgasquelle (20) geliefert werden kann, aufgeblasen werden kann und der eine zur Fahrzeugseitenwand weisende Außenseite und eine zum Fahrzeuginnenraum weisende Innenseite aufweist, wobei der oberhalb der Einblasöffnung gelegene Abschnitt (24) des Gassackes wenigstens zweimal gefaltet ist, **dadurch gekennzeichnet, daß** der oberhalb der Einblasöffnung gelegene Abschnitt (24) des Gassackes so gefaltet ist, daß die durch das Falten gebildeten Teile übereinander liegen und auf der Außenseite des Gassackes einen Stapel bilden, wobei die Faltlinien (26, 28) im wesentlichen horizontal verlaufen.

2. Baugruppe nach Anspruch 1, **dadurch gekennzeichnet,**
**daß** der oberhalb der Einblasöffnung gelegene Abschnitt (24) des Gassacks (22) zick-zackförmig gefaltet ist.

3. Baugruppe nach Anspruch 1 oder 2, **dadurch gekennzeichnet,**
**daß** die Baugruppe einen Fahrzeugsitz (14) aufweist und der Gassack in die Rückenlehne (16) des Fahrzeugsitzes eingebaut ist.

4. Verfahren zur Faltung eines Gassackes (22) für eine Gassack-Seitenaufprall-Schutzeinrichtung (18) einer Baugruppe nach einem der Ansprüche 1 bis 2.

## Claims

1. An assembly consisting of a vehicle structure (10) including a vehicle side wall (12) and of a gas bag side impact protection means (18) including a gas bag (22) which is adapted to be inflated by means of compressed gas which can be furnished by a source (20) of compressed gas, and which has an outer side facing the vehicle side wall and an inner side facing the vehicle interior, the section (24) of the gas bag located above the inflation port being folded at least twice, **characterized in that** the section (24) of the gas bag located above the inflation port is folded such that the parts formed by the folding lie one over the other to form a stack on the outer side of the gas bag, the creases (26, 28) running substantially horizontal.

2. The assembly as set forth in claim 1, **characterized in that**
the section (24) of the gas bag (22) located above the inflation port is concertina-folded.

3. The assembly as set forth in claim 1 or 2, **characterized in that**
the assembly includes a vehicle seat (14) and the gas bag is incorporated in the backrest (16) of the vehicle seat (14).

4. A method of folding a gas bag (22) for a gas bag side impact protection means (18) of an assembly as set forth in any of claims 1 to 2.

## Revendications

1. Ensemble constitué par une structure de véhicule (10) comportant une paroi latérale (12) de véhicule et par un dispositif de protection à coussin à gaz contre les chocs latéraux (18), comportant un coussin à gaz (22) qui peut être gonflé au moyen de gaz sous pression, qui peut être fourni par une source de gaz sous pression (20), et qui présente une face extérieure tournée vers la paroi latérale du véhicule et une face intérieure tournée vers l'habitacle du véhicule, la portion (24) du coussin à gaz située au-dessus de l'orifice d'insufflation, étant pliée de telle sorte que les parties formées par le pliage sont situées les unes au-dessus des autres et forment sur la face extérieure du coussin à gaz une pile, les lignes de pliage (26, 28) s'étendant sensiblement à l'horizontale.

2. Ensemble selon la revendication 1, **caractérisé en ce que** la portion (24) du coussin à gaz (22), qui est située au-dessus de l'orifice d'insufflation est pliée en zigzag.

3. Ensemble selon la revendication 1 ou 2, **caractérisé en ce que** l'ensemble présente un siège de véhicule (14), et le coussin à gaz est monté dans le dossier (16) du siège de véhicule.

4. Procédé de pliage d'un coussin à gaz (22) pour un dispositif de protection à coussin à gaz contre les chocs latéraux (18) d'un ensemble selon l'une des revendications 1 à 2.
